# EUROPEAN PATENT APPLICATION

(11) **EP 4 148 873 A1**
(43) Date of publication of application: **15.03.2023**
(21) Application number: 21195993.7
(22) Date of filing: 10.09.2021
(51) Int. Cl.: H01M 10/6554, H01M 10/6566, H01M 50/213, H01M 50/249, H01M 50/271, H01M 50/289, H01M 50/291, H01M 50/505, H01M 50/516

(54) **LOW-PROFILE BATTERY MODULE COOLING**

(71) Applicant: Rimac Automobiles Ltd., 10431 Sveta Nedelja (HR)
(72) Inventor: Pavlovic, Ivan, 10000 Zagreb (HR); Kisic, Daniel, 10450 Jastrebarsko (HR)
(74) Representative: Hoffmann Eitle

(57) **Abstract**

Battery module comprising at least one battery assembly in turn comprising a plurality of cells with two poles at opposing ends and arranged laterally in one row next to each other so that a pole of a cell is next to a pole of a neighbouring cell, a plurality of interconnectors connecting a pole of a cell to pole of a neighbouring cell, a cell holder arranged on at least one side of the plurality of laterally arranged cells so as to position the cells at a mutual distance and to obstruct at least partially a fluid flow in a direction between the two poles at opposing ends of each cell, the battery module further comprising a housing arranged to accommodate the battery assembly and forming two continuous spaces around each row of poles allowing for fluid flow.

## Description

### Technical field

The present invention relates to battery modules that hold a plurality of cells. The present invention relates specifically to battery modules that provide electric power to electric vehicles such as electric cars.

### Background

Electric vehicles are experiencing an increased popularity as they gradually replace or complement conventional vehicles with combustion type engines. Vehicles that employ electric motors as the means of drive and propulsion of course require on board electric power that can be generated by electric power sources (for example combustion engines and generators in so-called hybrid vehicles or fuel cells in hydrogenpowered vehicles). An important role, however, play of course batteries for the main storage or at least for buffering and short-time storage purposes. Usually, a relatively large capacity is desirable.

Such on-board power storages are composed of one or more battery modules that, in turn, comprise a plurality of battery cells. The individual cells are usually cylindrical cells in which a layered configuration of electrodes and electrolytes are rolled up so as to provide a large internal interaction surface. An individual cell provides a nominal cell voltage which is typically in the range of 1.5 Volts to 4.2 Volts, depending on chemistry and charging and degradation state of the battery cell. Besides, there are of course not only electrolyte-type battery cells, such as Lithium-ion batteries, but also solid state type battery cells that however incorporate a similar or related chemistry. Nevertheless, individual battery cells feature usually a cylindrical or slab-like housing regardless of the chemistry or physics employed. Further, the individual battery cells provide a relatively low voltage usually far below 10 volts, so that several cells are connected in series to provide the target voltage required in the vehicle.

It is thus clear that battery modules for electrically powered vehicles need to incorporate a substantial number of individual cells that are connected in series and, in respective sets, in parallel, in order to provide the required voltage and power. Usually, a number of cylindrical cells are arranged in an array of upright oriented cells. This configuration allows not only a dense packing but also a convenient way for interconnection in order to attain the required series and parallel connections between and amongst cells. However, this conventional configuration has a minimum height that is governed by the height or length of an individual cell, although a cell in principle features much more miniature dimensions in other directions. The overall height of a battery module may however pose problems when considering the arrangement of the modules inside the vehicle and/or when considering the height of the vehicle's centre of gravity.

Further, in such battery modules there is usually also generated heat from effects during charging and/or discharging the cells. In essence, the chemical processes for binding or releasing charges are associated with respective electric currents that dissipate heat as the flow through conductive paths with finite resistance. The cells of such battery modules may thus require active cooling by means of a cooling fluid (liquid, air, gas, etc.) that flows along or in the thermal vicinity of the cells so as to absorb heat and carry it away from the cells.

There is therefore a need for improved battery modules that allow for space-efficient mounting inside the vehicle and for contributing to lowering a vehicle's centre of gravity whilst maintaining the possibility of efficient and reliable cooling of the cells.

### Summary

The mentioned problems and drawbacks are addressed by the subject matter of the independent claims. Further preferred embodiments are defined in the dependent claims. Specifically, the embodiments of the present invention may provide substantial benefits that are described in part herein.

According to one aspect of the present invention there is provided a battery module comprising at least one battery assembly in turn comprising a plurality of cells with two poles at opposing ends and arranged laterally in one row next to each other so that a pole of a cell is next to a pole of a neighbouring cell, a plurality of interconnectors connecting a pole of a cell to pole of a neighbouring cell, a cell holder arranged on at least one side of the plurality of laterally arranged cells so as to position the cells at a mutual distance and to obstruct at least partially a fluid flow in a direction between the two poles at opposing ends of each cell, the battery module further comprising a housing arranged to accommodate the battery assembly and forming two continuous spaces around each row of poles allowing for fluid flow.

### Brief description of the drawings

Embodiments of the present invention, which are presented for better understanding the inventive concepts but which are not to be seen as limiting the invention, will now be described with reference to the figures in which:
- Figures 1A to 1C: show schematic views of a general configuration of a battery module according to an embodiment of the present invention;
- Figure 2: shows a schematic view of battery module according to another embodiment of the present invention;
- Figures 3A to 3C: show schematic views of flow guiding means according to embodiments of the present invention; and
- Figures 4A to 4C: show schematic views of flow guiding means in a battery module according to embodiments of the present invention.

### Detailed description

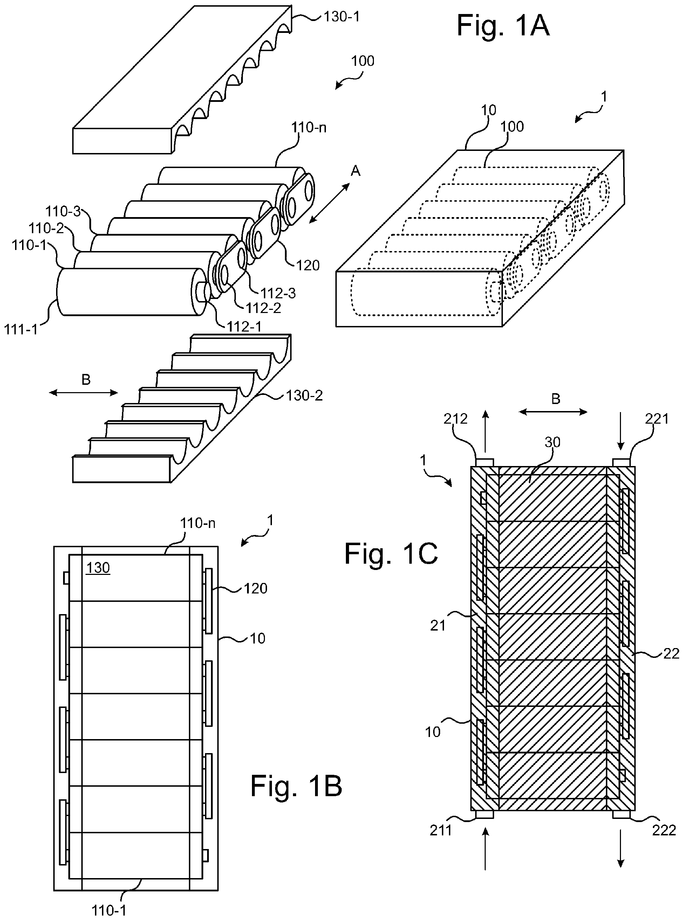

Figures 1A to 1C show schematic views of a general configuration of a battery module according to an embodiment of the present invention. Specifically, there is shown in Figure 1A an explosion view of a battery module 1 comprising a housing. 10 and a battery assembly 100. The battery assembly 100 is again described in an explosion view on the left-hand side. Specifically, the battery assembly 100 comprises a plurality of cells 110-1, 110-n, with two poles 111, 112 at opposing ends and arranged laterally in one row (in a direction A) next to each other so that a pole 112-1 of a cell 110-1 is next to a pole 112-2 of a neighbouring cell 110-2.

A plurality of interconnectors 120 are arranged to connect a pole of a cell to pole of a neighbouring cell, for example as shown poles 112-2 and 112-3. A cell holder 130-1 is arranged on at least one side of the plurality of laterally arranged cells so as to position the cells at a mutual distance and to obstruct at least partially a fluid flow in a direction B between the two poles at opposing ends of each cell. Said direction B may be perpendicular to direction A. In further embodiments there may be arranged a plurality of voltage sensing connectors and/or temperature sensors on or in said cell holder so as to not obstruct fluid flow. For example, the mentioned connectors and/or sensors may forma flush surface with the cell holder or may be moulded in the cell holder.

A further cell holder 130-2 may be arranged from the other side. The battery module's housing 10 is arranged to accommodate the battery assembly 100 and forming two continuous spaces around each row of poles allowing for fluid flow, which is explained in greater detail in the following. The further cell holder may be arranged on an opposing side of the cell holder and substantially closing fluid flow in a direction B between the two poles at opposing ends of each cell. For this purpose the tow cell holders may comprise matching/fitting portions at an area where they meet so as to seal fluid flow and/or ensure a matching positioning. Figures 1B and 1C show schematic views of a top view of battery module 1 according to the present embodiment of the present invention. In Figure 1A, there are again shown the housing 10, the cell holder 130-1, the cells 111-1...111-n, and the interconnectors 120. As now shown in Figure 1C, the cell holder forms an area 30 that obstructs at least partially a fluid flow in a direction B between the two poles at opposing ends of each cell 111-1,.... In this way, the housing 10 accommodates the battery assembly and forms two continuous spaces 21, 22 around each row of poles 120 allowing for fluid flow. Specifically, the cell holder is recessed toward both ends of a preferably cylindrical cell, so that a continuous space covers a part of a cell extending from a pole toward the opposing pole.

As shown, the battery module thus comprises continuous spaces 21, 22 around each row of poles forms a flow path for a cooling fluid along a row of poles that are arranged mutually next to each other. The housing 10 or generally the battery module 1 can comprise for each continuous space 21, 22 an inlet opening 211, 221 and an outlet opening 212, 222 at respectively opposing ends of the housing 10.

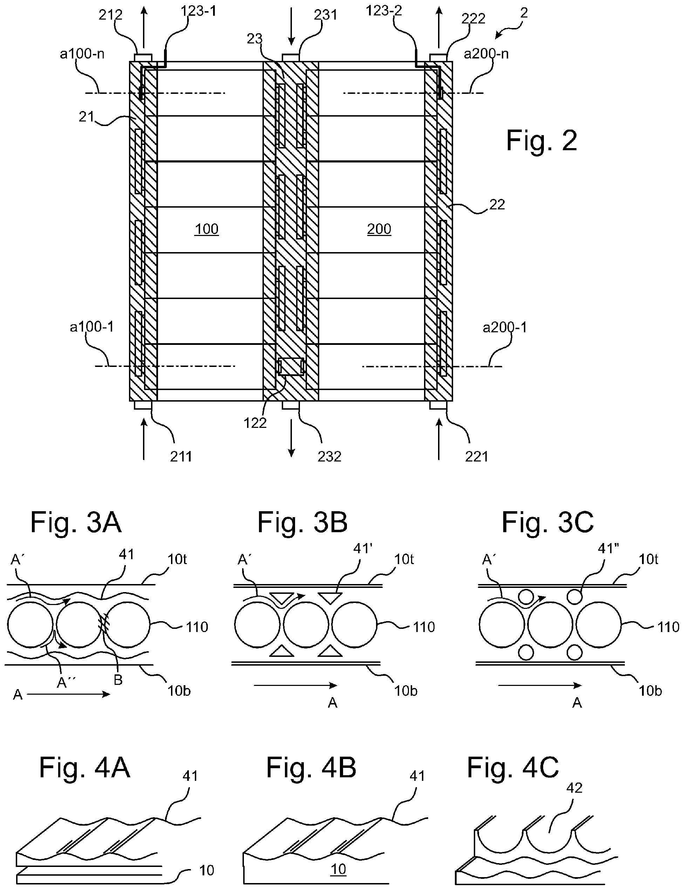

Figure 2 shows a schematic view of battery module according to another embodiment of the present invention. Specifically, the battery module 2 comprising not only the battery assembly 100 but also a further battery assembly 200 that is arranged so that the main axes a200-1 ... a200-n of its cells lie substantially in the same plane as the main axes a100-1 ... a100-n of the cells of said battery assembly 100, and wherein the housing 10 forms continuous spaces 21, 22, 23 around each row of poles allowing for fluid flow. Specifically, the housing 10 may form a first continuous space 21 around one row of poles of the cells of the battery assembly 100, a second continuous space 22 around one row of poles of the cells of the further battery assembly 200, and a third, preferably, central continuous space 23 around the rows of the respective other poles of the cells of the battery assemblies 100, 200.

In a further embodiment, there are provided openings to each continuous space that maybe specifically designed or designated as inlets and, respectively, outlets. For example, an inlet may have a first fluid connector that is different and effectively not compatible with a fluid connector of an outlet. Thus, hoses or tubes for guiding a cooling fluid may be connected only in a specific fashion so that a particular flow direction of a cooling liquid can be ensured. In addition to this or alternatively thereto, there may be provided one-way valves that allow only for the appropriate fluid flow direction corresponding on the arrangement upstream or downstream an inlet or outlet. Such valves may comprise a correspondingly orienteered valve leaf or diaphragm.

As shown in Figure 2, the battery module 2 may comprise an inlet 211 to said first continuous space 21, an inlet 221 to said second continuous space 22, and an outlet 232 of said central continuous space 23 on one side of the housing 10, and an outlet 212 of said first continuous space 21, an outlet 222 of said second continuous space 22, and an inlet 231 to said central continuous space 231 on an opposing side of the housing 10. The central continuous space 23 may be arranged with an effective flow cross-section that essentially equals twice the effective flow cross section of the first or second continuous space, if these are substantially the same.

Alternatively, the central continuous space 23 may be arranged with an effective flow cross-section that essentially equals the sum of the effective flow cross section of the first continuous space and the effective flow cross section of the second continuous space. In this way, roughly the same amount of cooling liquid can be conveyed - at approximately similar pressures - through the central continuous space 23 as through the first and second continuous space together.

The specific directions of flow and/or the specific configurations regarding the respective effective flow cross sections may provide the advantage that most or all of the individual cells are cooled to a similar extent. This, in turn, can ensure that the temperature variation amongst all or most cells is brought to a minimum. For example, it can be advantageous if the temperature variation is less than 5 K.

In a further embodiment both battery assemblies 100, 200 are low-voltage battery assemblies for that its respectively constituting cells are connected in series to provide a relatively low voltage equalling for example the nominal voltage of a single cell multiplied by the number n of cells in the battery assembly. The battery assemblies 100, 200 can be in turn connected in series so as to form a high-voltage battery module with a relatively high voltage equalling essentially the sum of the voltage of the battery assemblies. For this purpose, a bar connector 122 may be provided to establish the (series) connection of the battery assemblies.

Further, the battery module 2 - or any other battery module according to the embodiments of the present invention- may comprise one or more electric module terminals 123-1, 123-2. These electric module terminals 123-1, 123-2 can be arranged in the vicinity of an opening in fluid communication with a continuous space, preferably not farther away than 15 mm. For example, a first electric module terminal 123-1 is arranged in the vicinity of outlet 212, and a first electric module terminal 123-2 is arranged in the vicinity of outlet 222. In this configuration, relatively warm cooling liquid is used to cool the terminals. If an enhanced cooling of the terminals is desired, the flow direction may be modified so that the terminals are arranged in the vicinity of corresponding inlets.

Specifically, in one embodiment of the present invention, a battery module comprises at least one battery assembly which in turn comprises a plurality of cells with two poles at opposing ends and arranged laterally in one row next to each other so that a pole of a cell is next to a pole of a neighbouring cell, a plurality of interconnectors connecting a pole of a cell to pole of a neighbouring cell, and a cell holder arranged on at least one side of the plurality of laterally arranged cells so as to position the cells at a mutual distance and to obstruct at least partially a fluid flow in a direction between the two poles at opposing ends of each cell. The battery module according to this embodiment further comprises a housing and an electric module terminal. The housing that is arranged to accommodate the battery assembly and forming two continuous spaces around each row of poles allowing for fluid flow. The electric module terminal is provided for establishing electric connection to the module and may carry substantial current, especially in the context of electric vehicles. The electric module terminal in this embodiment is arranged in the vicinity of an opening in fluid communication with a continuous space as mentioned above. Further there may be provided means for guiding a fluid flowing through said opening toward or even around an internal part of the electric module terminal that is located inside the module housing.

Generally, the battery module may comprise a housing that in turn comprises a base housing and a sealed lid. In this way, the battery assemblies can be inserted into the housing and the lid can be closed and sealed. At least one cell holder can also form one part with the housing. For example, a first cell holder forms part of the base housing and/or a second cell holder forms part of the lid. Generally, a cell holder can be from one piece and may comprises a plurality of recesses, each one configured to accommodate at least in part a respective cell.

Figures 3A to 3C show schematic views of flow guiding means according to embodiments of the present invention. Generally, such flow guiding means can be implemented as one or more flow guiding portions that are arranged in the continuous spaces arranged. These portions are for limiting a variation in a cross section along said fluid flow. In other words, the flow guiding portions may not only guide and direct the cooling fluid but may also avoid an unwanted compression and decompression of the cooling fluid as it flows along the continuous space. The Figures 3A to 3C show the configuration and location of flow guiding means and respective portions in a cross section view in a plane along the flow direction.

Specifically, there is shown in Figure 3A a cross section of the continuous space along a plane in the direction A, e.g. an effective flow direction of a cooling fluid. The individual cells 110 are shown as circular cross section, assuming their generally cylindrical configuration. Their mutual distance along the direction A can be chosen to vanish or, alternatively to provide a nominal minimum distance which can serve for example a means for compensating a tolerance in positioning and/or manufacturing. However, the substantial part, e.g. more than or approximately 65%, preferably, 70% of the cooling liquid flows along the direction A'. The housing, in other figures referred to as 10, is shown with a cross section of a top part 10t and a bottom part 10b. It is noted that the denominations top and bottom are arbitrary and are for illustrative purposes only.

A flow guiding portion 41 is shown in the form of a protrusion and therefore constitutes a flow guiding element extending from an inner wall of said housing, e.g. wall 10t, 10b, into the space between two neighbouring cells 110. Preferably, the flow guiding portion comprises one of said flow guiding elements 41 for each pair of neighbouring cells. In the shown example, there is also the generally optional configuration of the flow guiding portion comprising flow guiding elements for each pair of neighbouring cells on both sides, i.e. on both a lower side toward the bottom part 10b of the housing as well as an upper side toward the top part 10t of the housing. Preferably, the flow guiding elements are arranged so that their cross section is symmetric on these both sides with a symmetry axis along direction A at a centre of each cell.

Figures 3B and 3C show further cross section of the continuous space along a plane according to further embodiments. These embodiments specifically refer to a distribution of the flow A into a principal flow - depicted with A' in Figures 3A through 3C - that cools the cells along parts that are mainly exposed to the continuous spaces. Likewise, it may be advantageous to provide also for local flows that can comprise perpendicular components to the principal flow and may penetrate into areas where they substantially face each other (shown for simplicity only in Figure 3A as A" while likewise present also in other embodiments). The local flow A'' may avoid or at least decrease the extent of dead zones B which may result in local heating or even overheating of the cells. Preferably, the flows can be distributed as 70/30 or 65/35 (principal flow / local flow) so as to provide satisfactory pressure drops, lower flowrates, and sufficient cooling of the cells at most parts of the surface exposed to the continuous space.

Specifically, the flow guiding portion comprises elements 41' of Figure 3B feature a substantially triangular cross section. This embodiment may provide the advantage of minimizing the above-mentioned dead zones of fluid surrounding the cell so that the individual cell is cooled efficiently practically along the whole perimeter. Further, Specifically, the flow guiding portion comprises elements 41" of Figure 3C feature a substantially circular cross section. This embodiment may provide a most efficient design that cools the perimeter of the cells evenly with a minimum pressure drop.

Figures 4A to 4C show schematic views of flow guiding means in a battery module according to embodiments of the present invention, especially in relation to other parts of the module such as the cell holder and/or the housing. Figure 4A shows schematically an embodiment in which the flow guiding portion 41 is separate from both the housing 10 and any cell holder part. The vertical distance between the flow guiding portion 41 and the housing (wall) 1o is for illustrative purposes only. The flow guiding portion 41 may be adjacent to an inner wall of the housing 10, adhere thereto, or glued thereto.

In Figure 4B there is shown schematically an embodiment in which the flow guiding portion 41 is formed as one piece with the housing 10. In this way, the flow guiding portion and its respective elements may be formed together with the housing and thus be manufactured simply during, for example, injection moulding or die casting of the housing. Further, there is shown in Figure 4C an embodiment in which the flow guiding portion 41 is formed as one piece with the cell holder that features recesses 42 for accommodating and locating a cell of the battery assembly. Although the general configurations shown in Figures 4A to 4C depict the recesses 41 as explained in conjunction with Figure 3A, these embodiments may be readily modified toward the alternative configurations of flow guiding means, portions and elements as, for example, described in conjunction with Figure 3B or 3C. Further, the flow guiding portion may be manufactured as one piece with both the cell holder and the housing. Although detailed embodiments have been described, these only serve to provide a better understanding of the invention defined by the independent claims and are not to be seen as limiting.

## Claims

1. A battery module comprising at least one battery assembly in turn comprising:
a plurality of cells with two poles at opposing ends and
arranged laterally in one row next to each other so that a pole of a cell is next to a pole of a neighbouring cell,
a plurality of interconnectors connecting a pole of a cell to pole of a neighbouring cell,
a cell holder arranged on at least one side of the plurality of laterally arranged cells so as to position the cells at a mutual distance and to obstruct at least partially a fluid flow in a direction between the two poles at opposing ends of each cell,
the battery module further comprising a housing arranged to accommodate the battery assembly and forming two continuous spaces around each row of poles allowing for fluid flow.

2. The battery module according to claims 1, wherein a continuous space around each row of poles forms a flow path for a cooling fluid along a row of poles that are arranged mutually next to each other.

3. The battery module according to claim 1 or 2, wherein a continuous space covers a part of a cell extending from a pole toward the opposing pole.

4. The battery module according to any one of claims 1 to 3, wherein the housing comprises for each continuous space an inlet opening and an outlet opening at opposing ends of said housing.

5. The battery module according to any one of claims 1 to 4, further comprising a flow guiding portion arranged in said spaces arranged for limiting a variation in a cross section along said fluid flow.

6. The battery module according to claim 5, wherein said flow guiding portion comprises a flow guiding element extending from an inner wall of said housing into the space between two neighbouring cells.

7. The battery module according to claim 6, wherein said flow guiding portion comprises one of said flow guiding elements for each pair of neighbouring cells.

8. The battery module according to claim 7, wherein said flow guiding portion comprises flow guiding elements for each pair of neighbouring cells on both sides.

9. The battery module according to any one of claims 1 to 8, comprising a further battery assembly arranged so that the main axes of its cells lie substantially in the same plane as the main axes of the cells of said battery assembly, and wherein the housing forms continuous spaces around each row of poles allowing for fluid flow.

10. The battery module according to claim 9, wherein the housing forms a first continuous space around one row of poles of the cells of the battery assembly, a second continuous space around one row of poles of the cells of the further battery assembly, and a central continuous space around the rows of the respective other poles of the cells of the battery assemblies.

11. The battery module according to claim 10, comprising an inlet to said first continuous space, an inlet to said second continuous space, and an outlet of said central continuous space on one side of the housing, and an outlet of said first continuous space, an outlet of said second continuous space, and an inlet to said central continuous space on an opposing side of the housing.

12. The battery module according to any one of claims 9 to 11, wherein both battery assemblies are low-voltage battery assemblies being connected in series so as to form a high-voltage battery module.

13. The battery module according to any one of claims 1 to 12, wherein an electric module terminal is arranged in the vicinity of an opening in fluid communication with a continuous space, preferably not farther away than 15 mm.

14. The battery module according to any one of claims 1 to 13, wherein said housing comprises a base housing and a sealed lid.

15. The high voltage battery module according to any one of claims 1 to 14, wherein the cell holder is from one piece and comprises a plurality of recesses, each one configured to accommodate at least in part a respective cell.
